# EUROPEAN PATENT SPECIFICATION

(11) **EP 3 473 482 B1**
(45) Date of publication and mention of the grant of the patent: **02.12.2020**
(21) Application number: 18201301.1
(22) Date of filing: 18.10.2018
(51) Int. Cl.: B60L 1/00, B65G 65/23, B65F 3/00, B65F 3/02, B65F 3/24, B60L 7/10, B60L 50/40, B60L 50/50

(54) **LOADING SYSTEM HAVING AN ENERGY MODULE, REFUSE TRUCK WITH SUCH A SYSTEM AND IMPLEMENTING METHOD**
LADESYSTEM MIT EINEM ENERGIEMODUL, MÜLLWAGEN MIT EINEM SOLCHEN SYSTEM UND DURCHFÜHRUNGSVERFAHREN
SYSTÈME DE CHARGEMENT AYANT UN MODULE D'ÉNERGIE, CAMION DE DÉCHETS AVEC UN TEL SYSTÈME ET PROCÉDÉ DE MISE EN OEUVRE

(30) Priority: 18.10.2017 NL 2019751
(43) Date of publication of application: 24.04.2019
(73) Proprietor: Terberg Machines B.V., 3403 NL Ijsselstein (NL)
(72) Inventor: Versteeg, Jan Paul, 6708 RV WAGENINGEN (NL); Gravesteijn, Pieter Bouwe, 3402 SE IJSSELSTEIN (NL)
(74) Representative: Verdijck, Gerardus

(56) References cited:
- EP-A1- 2 347 978
- EP-A1- 2 383 859
- WO-A1-2013/008331
- WO-A2-2009/087551
- CA-A1- 2 825 719

## Description

The present invention relates to a loading system for a refuse truck. Such a loading system is used particularly to empty bins, filled for instance with waste, into a refuse truck or collection container.

Known in practice are loading systems with which refuse bins, or waste bins, are emptied into a refuse truck. The bins are raised here using a loading seat and then tilted into the opening of the collector. Such loading systems are usually provided on the rear side of a refuse truck. A lifting system, i.e. a lifting and tilting mechanism, provides for the gripping of the waste bin by the loading system and the subsequent movement for emptying the bin into the collector.

A number of conventional loading systems make use of an electrical drive system which has to be provided with energy by making use of an energy source from a refuse truck, such as the vehicle battery thereof. An electrical drive for the loading system is described for instance in EP 2 347 978 A1 and CA2825719 A1 (Haul All Equipment Ltd.) . It is hereby possible to have the loading system function more independently of a vehicle, particularly of the fuel engine thereof.

A problem which occurs during emptying of waste bins is that a peak capacitance is necessary here for short periods during lifting and tilting of the bin. This causes peak loads for the drive system, which hereby has to take a larger form or is periodically overloaded, and may therefore have for instance a shorter working life.

The present invention house for its object to provide a loading system with which the above stated problems are obviated, or at least reduced.

This object is achieved with the loading system for lifting and emptying a bin into a collector according to the invention, the loading system comprising:
- a frame attachable with coupling means to the collector;
- a lifting mechanism arranged on the frame for picking up and lifting the bin;
- a lifting drive system operatively connected to the lifting mechanism, wherein the lifting drive system comprises:
   - a lifting drive provided with a power supply connection and configured to drive the lifting mechanism; and
   - an energy module comprising a capacitor for providing energy to the lifting drive via the power supply connection and characterised by further features included in claim 1.

By providing a collector, preferably in the form of a collection container or a refuse truck, bins filled for instance with waste including domestic refuse, green waste and paper, can be emptied into this collector. By attaching the frame with coupling means to the collector such bins can be picked up and subsequently emptied in effective manner. The lifting mechanism is provided for this purpose with a lifting drive system. According to the invention the lifting drive system comprises a lifting drive configured to drive the lifting mechanism, as well as an energy module. The lifting drive can for instance be embodied in similar manner as described in the above stated patent document EP 2 347 978 A1, wherein it is noted that alternative (electrical) embodiments are also possible.

Providing the loading system with a separate energy module according to the invention achieves that the energy required during a peak demand or peak load can be supplied wholly or partially by the energy module. This means that for this peak demand or peak load the loading system is substantially independent of the energy system of for instance the collector or refuse truck, or wherein the required energy is supplied at least partially by the energy module.

Providing the energy module with a capacitor according to the invention enables the required energy to be actively provided during the peak moments to the lifting drive in effective manner via the power supply connection. Such a capacitor can store energy in effective manner and generate energy within a relatively short period of time. Charging of the capacitor can take place outside the peak moments.

This has the advantage that operation is possible within specifications of an existing energy source of a collector and/or refuse truck, wherein the energy module responds to peak demands or peak loads. This avoids the vehicle specifications being exceeded. This therefore reduces the risk of malfunctions and other problems.

Peak loads occur during lifting of heavy bins in particular, wherein relatively high currents flow through the power cables. It is found in practice that in conventional systems a loss of voltage of up to 5 V can hereby occur in the case of a battery or battery pack operating at 24 V. This limits the capacitance of the loading system. By applying the energy module according to the invention, which wholly or partially meets the peak load, this loss can be limited under similar conditions to less than 1 V. This has the particular advantage that the capacitance of the loading system increases significantly, by as much as 20-25%, without the loading system having to be further modified. This enhances the effectiveness of the loading system according to the invention.

In a preferred embodiment according to the invention the energy module is provided with a charging circuit for charging a capacitor. It is hereby possible to charge the capacitor in effective manner outside the peak moments following generation of the energy during a peak moment. This charging can for instance take place by making use of the energy source of the collector or refuse truck on which the loading system is provided.

In a currently preferred embodiment the capacitor comprises a supercapacitor.

Providing a so-called supercapacitor enables the desired amount of energy to be stored in effective manner and generated in a relatively short period of time. It is preferably even possible here to have the total energy of a complete emptying cycle provided by the supercapacitor. This has the additional advantage that the loading system can if desired be wholly driven with energy from the energy module. This is possible for instance in the case the refuse truck is applied in the case of periodic emptying of a bin with a certain interval between separate emptying operations or separate groups of emptying operations, wherein the interval can be used to charge the capacitor. In an alternative embodiment, wherein for instance relatively large numbers of bins always have to be emptied in a relatively short period of time at a collection site, it is possible to also couple the central energy source or central power supply to the lifting drive of the loading system. The peak moments are then wholly or partially dealt with by the capacitor, for instance a supercapacitor, and outside these moments the energy required for the loading system is supplied by the co-acting energy supplies, viz. the energy module and the conventional power supply such as a vehicle battery.

In an advantageous embodiment according to the invention the energy module is provided with an energy module relay arranged between the capacitor and lifting mechanism.

Providing an energy module relay makes it possible to carry out charging of the capacitor in controlled manner. Use is preferably made here of a controller which is provided for the loading system and which can switch the relay on and off.

In an advantageous embodiment the energy module is provided with connecting means for connecting the energy module operatively to an energy supply.

The energy supply makes it possible to provide the energy module with energy for charging the capacitor, preferably the supercapacitor. In a currently preferred embodiment of the invention a main relay is arranged here between the energy supply and the energy module. This functions as additional safeguard and is preferably switched by the controller of the loading system. The energy supply is for instance a battery pack or battery of the collector and/or refuse truck provided with a loading system according to the invention. Such a battery is for instance a vehicle battery, in a currently preferred embodiment a 24 V vehicle battery.

It has been found that, when the energy module according to the invention is applied in combination with a 24 V vehicle battery, the voltage supplied to the loading system is constant to a greater extent when compared to conventional systems. Such conventional systems have a relatively large voltage dip at a peak demand of several amperes. It has been found that the loading system according to the invention does not display such a dip, or in any case does so to lesser extent, during use of the energy module.

As indicated above, it is possible to have the energy supply feed energy directly to the capacitor, and optionally to also connect it directly to the lifting drive of the loading system. In such an embodiment according to the invention the power supply connection is provided with first connecting means for providing energy from the energy module and second connecting means for providing energy from the energy supply. This provides for a greater flexibility in the supply of required energy to the loading system.

The loading system preferably comprises a lifting control for controlling the lifting mechanism, wherein the lifting control is configured to control the energy module as controller.

In an advantageous embodiment according to the invention the loading system comprises energy recovery means for charging a capacitor of the energy module during setting down of a bin.

Providing energy recovery means enables energy to be recovered for the purpose of charging the capacitor. An energy-efficient system is hereby obtained. The energy recovery means can be embodied in various ways, for instance using coils, magnets, cylinders and the like.

The invention further relates to a refuse truck provided with a loading system according to the invention.

Such a refuse truck provides the same effects and advantages as stated in respect of the loading system.

In a possible embodiment the refuse truck comprises an energy recovery system for recovering energy from the vehicle and charging a capacitor of the energy module therewith. It is hereby possible for instance to make use of braking energy of the vehicle so as to thereby enable energy to be provided in effective manner to the loading system, in particular the energy module thereof.

The invention also relates to a method for emptying a bin, the method comprising the steps of:
- providing a loading system and/or refuse truck according to the invention;
- picking up the bin to be emptied with the loading system;
- lifting and emptying the bin; and
- setting down the emptied bin.

Such a method provides the same effects and advantages as stated in respect of the loading system and/or refuse truck.

In an advantageous embodiment according to the invention the method comprises the step of providing energy to the lifting mechanism with the energy module such that the lifting mechanism can perform a full emptying cycle with pick-up, emptying and setting down of a bin. An effective emptying cycle can in this way be performed, wherein during emptying no energy is required from another energy supply, including for instance a vehicle battery.

Further advantages, features and details of the invention are elucidated on the basis of preferred embodiments thereof, wherein reference is made to the accompanying drawings, in which:
- Figure 1 shows a view of a refuse truck provided with a loading system according to the invention; and
- Figure 2 shows a schematic representation of the system according to the invention.

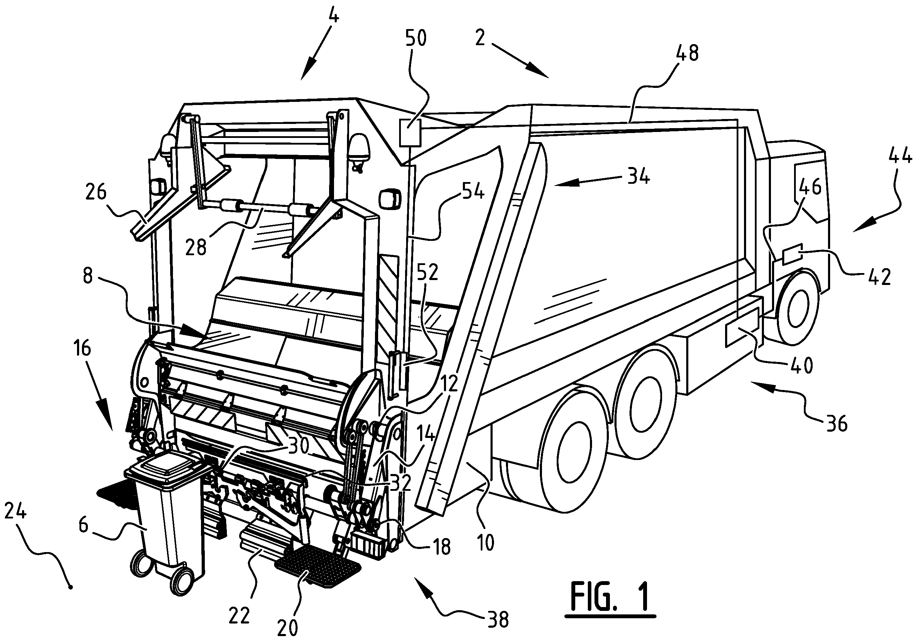

Refuse truck 2 (Figure 1) with a collector and press is provided with loading system 4. Loading system 4 is used to empty bins 6. Bins 6 are, among others, bins of the type EN 840-1, -2, -3 and -4 with respective volumes of 80-360 litres, 500-1200 litres, 770, 1100, 1300 litres, and 750-1700 litres. It is optionally also possible to use refuse truck 2 to place refuse bags therein. Bin 6 is emptied into loading opening 8 which is bounded on the sides by side walls or side shields 10 provided on refuse truck 2.

In the shown embodiment loading system 4 is provided with substantially the same width as that of refuse truck 2. The widest possible loading opening 8 is hereby provided and bins of diverse dimensions can be emptied with optimal flexibility. Uprights 12 form the connection between loading system 4 and refuse truck 2. Mounted on uprights 12 in the shown embodiment are lifting arms 14 with which engaging mechanism 16 can be moved for the purpose of lifting bin 6. Engaging mechanism 16 is provided here with lifting shaft 18. Refuse truck 2 is also provided with footboard 20. A dustman for instance can take up position on footboard 20 during movement of refuse truck 2. Buffers or carrier 22 are provided such that a bin 6 for emptying can rest thereon during the pivoting movement. The pivoting movement of bin 6 is carried out from ground surface 24. In the shown embodiment guides 26 are provided on or close to the top part of loading system 4 for pushing open the lid of bin 6. Stop member 28 is preferably arranged here, preferably along substantially the whole width of loading opening 8, in order to avoid bin 6 rotating too far, at least during the pivoting movement. Comb 30 of engaging mechanism 16 can engage under an edge of bin 6. Clamping plate or enclosing plate 32 is used to clamp the bin edge between this plate 32 and comb 30. Couplings 34 connect loading system 4 to refuse truck 2 in preferably releasable manner.

Bin 6 is picked up during the emptying cycle using comb 30 and clamping plate 32. During the lifting and tilting movement bin 6 rests on buffers or carriers 22. Bin 6 is tilted by rotation around lifting shaft 18, wherein by opening the lid of bin 6 the content thereof is emptied into refuse truck 2.

In the shown embodiment energy module 36 is arranged as separate module for the purpose of providing energy to drive 38 of loading system 4. Drive system 38 of loading system 4 is of the electro-hydraulic type in the shown embodiment, in accordance with for instance that shown in EP 2 347 978 A1. In the shown embodiment refuse truck 2 is provided with battery or battery pack 40 which is charged by combustion engine 44 using dynamo 42. Dynamo 42 is connected for this purpose to battery or battery pack 40 via connecting line 46. Battery or battery pack 40 is connected via cable 48 to separate energy module 50. Module 50 is operatively connected to control 52 of loading system 8 by cable 54.

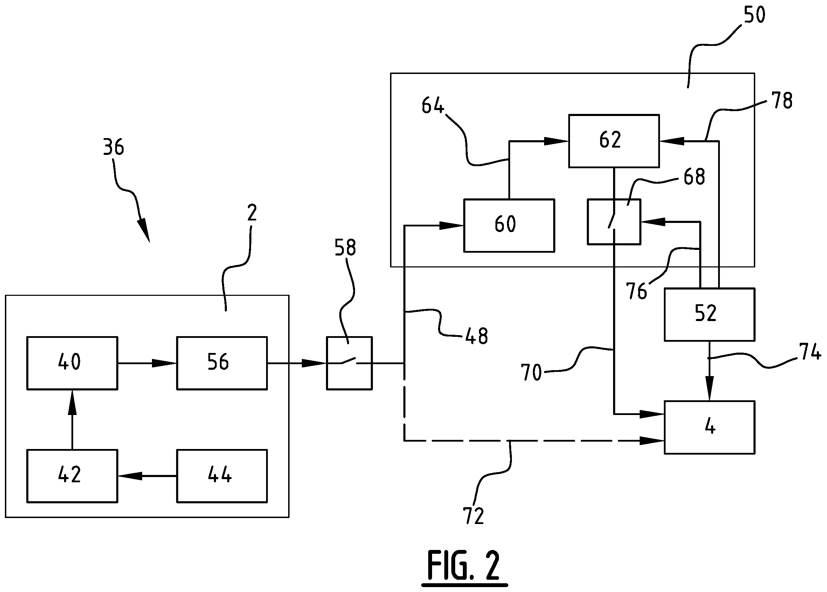

Refuse truck 2 (Figure 2) is provided with a conventional connection 56 for electricity users. Connection 56 is arranged at battery or battery pack 40 which is charged with charging current device or dynamo 42 using engine 44. Energy module 50 is connected via main relay 58 to connection 56 of refuse truck 2.

In the shown embodiment energy module 50 is provided with charging device 60 which is connected via cable 48 to main relay 58. Charging device 60 charges capacitor 62 via charging cable 64. Capacitor 62 is connected via energy module relay 68 and cable 70 to loading system 4. Control 52 is operatively connected via connection 74 to loading system 4 for the purpose of passing commands to loading system 4. Control 52 is operatively connected via connection 76 to relay 68 for switching thereof. Capacitor 62 can be controlled or read by control 52 via connection 78.

In the shown embodiment it is possible to provide the total energy required for loading system 4 from energy module 50, and in particular capacitor 62. This latter is charged from refuse truck 2 via charging cable 48 between emptying of bins 6. It is optionally also possible to use energy from battery or battery pack 40 via connecting cable 72 for the purpose of controlling loading system 4. This is particularly relevant when it is not possible to sufficiently charge capacitor 62 between emptying of one or more bins 6.

In the shown embodiment energy module 50 is provided as separate module at loading system 4. This also makes application possible with existing electrically driven loading systems. It will be apparent that it is likewise possible according to the invention to provide energy module 50 in integrated manner in or on loading system 4.

In the shown embodiment capacitor 62 is provided with a voltage of between 2 and 3 V, preferably about 2.85 V, and has a capacitance of 3400 F. It will be apparent that more than one capacitor 62 can also be used in an alternative configuration of energy module 50.

It will likewise be apparent that further alternative configurations are also possible according to the invention. It is thus possible for instance to replace or supplement battery or battery packs 40 with other energy supplies, including for instance a fuel cell. It is also possible to have battery or battery pack 40 alternatively or additionally charged with charging systems from external charging sources.

Experiments with loading system 4 demonstrate that it is possible, with a correct dimensioning of energy module 50, and in particular capacitor 62, to perform a complete emptying cycle of bin 6. It is thus even possible to empty three to four bins 6 with a single charge of capacitor 62. In such an embodiment it is possible to have the power supply to loading system 4 for the purpose of emptying bins 6 provided wholly by energy module 50. In an alternative embodiment battery or battery pack 40 is also operatively connected to loading system 4 for the purpose of supplying energy, for instance when a plurality of bins 6 have to be emptied in quick succession. Experiments have demonstrated that by applying module 50 it is possible to comply with the energy-specific construction guidelines usually applying to the chassis of refuse truck 2.

Further experiments demonstrate that, when conventional loading systems 4 are used in conventional refuse trucks 2, i.e. without energy module 50, relatively high currents flow through connecting cables 48, particularly during lifting of heavy bins 6. A loss of voltage of up to 5 V can hereby occur in a battery or battery pack 40 operating at 24 V. This limits the capacitance of loading system 4. By applying energy module 50 this loss can be limited in similar conditions to less than 1 V such that the capacitance of loading system 4 increases significantly without components of the loading system having to be modified. This is achieved in that energy module 50 provides for the necessary high current peak. It is thus found that during lifting of bins 6 with maximum load the current drawn from battery 40 and charging device 42 is about 60% lower than in similar conventional loading systems.

The present invention is by no means limited to the above described preferred embodiments thereof. The rights sought are defined by the following claims, within the scope of which many modifications can be envisaged.

## Claims

1. Loading system (4) for lifting and emptying a bin (6) into a collector, the loading system (4) comprising:
- a frame attachable with coupling means to the collector;
- a lifting mechanism (14, 16) arranged on the frame for picking up and lifting the bin (6);
- a lifting drive system (38) operatively connected to the lifting mechanism (14, 16),
wherein the lifting drive system (38) comprises:
- a lifting drive (38) provided with a power supply connection (70,72) and configured to drive the lifting mechanism; and
- an energy module (50) comprising a capacitor (62) for providing energy to the lifting drive via the power supply connection, **characterised in that** the energy module (50) is provided with connecting means (48) for operatively connecting the energy module (50) to an energy supply (36), and wherein the power supply connection (70,72) is provided with first connecting means (70) for providing energy from the energy module (50) and second connecting means (72) for providing energy from the energy supply (36).

2. Loading system (4) as claimed in claim 1, wherein the energy module (50) comprises a charging circuit (60) for charging the capacitor (62).

3. Loading system (4) as claimed in claim 1 or 2, wherein the capacitor (62) comprises a supercapacitor.

4. Loading system (4) as claimed in claim 1, 2 or 3, wherein the energy module (50) is provided with an energy module relay (68) arranged between the capacitor and the lifting mechanism.

5. Loading system (4) as claimed in any of the foregoing claims, further comprising a main relay (58) arranged between the energy module (50) and energy supply (36).

6. Loading system (4) as claimed in claim 1 or 5, wherein the energy supply (36) comprises a vehicle battery (40).

7. Loading system (4) as claimed in claim 6, wherein the vehicle battery (40) comprises a 24 V battery.

8. Loading system (4) as claimed in any of the foregoing claims, further comprising a lifting control (52) for controlling the lifting mechanism (14, 16), wherein the lifting control (52) is configured to control the energy module (50).

9. Loading system as claimed in any of the foregoing claims, further comprising energy recovery means for charging the capacitor (62) of the energy module (50) during setting down of a bin (6).

10. Refuse truck (2) provided with a loading system (4) as claimed in any of the foregoing claims.

11. Refuse truck (2) as claimed in claim 10, further comprising an energy recovery system for recovering energy from the vehicle and charging the capacitor (62) of the energy module (50) therewith.

12. Method for emptying a bin (6), the method comprising the steps of:
- providing a loading system (4) and/or refuse truck (2) as claimed in any of the foregoing claims;
- picking up the bin (6) to be emptied with the loading system (4);
- lifting and emptying the bin (6); and
- setting down the emptied bin (6).

13. Method as claimed in claim 12, further comprising the step of providing energy to the lifting mechanism (14, 16) with the energy module (50) such that the lifting mechanism (14, 16) can perform a full emptying cycle with pick-up, lifting, emptying and setting down of a bin (6).

## Patentansprüche

1. Ladesystem (4) zum Anheben und Entleeren eines Müllbehälters (6) in einen Sammler, wobei das Ladesystem (4) aufweist:
- einen Rahmen, der mit Kopplungseinrichtungen an dem Sammler befestigbar ist;
- einen Hebemechanismus (14, 16), der auf dem Rahmen angeordnet ist, um den Müllbehälter (6) aufzunehmen und anzuheben;
- eine Hebeantriebssystem (38), das betriebsfähig mit dem Hebemechanismus (14, 16) verbunden ist, wobei das Hebeantriebssystem (38) aufweist:
- einen Hebeantrieb (38), der mit einem Leistungsversorgungsanschluss (70, 72) versehen ist und konfiguriert ist, um den Hebemechanismus anzutreiben; und
- ein Energiemodul (50), das einen Kondensator (62) zur Bereitstellung von Energie über den Leistungsversorgungsanschluss an den Hebeantrieb aufweist, **dadurch gekennzeichnet, dass** das Energiemodul (50) mit Anschlusseinrichtungen (48) versehen ist, um das Energiemodul (50) mit einer Energieversorgung (36) betriebsfähig zu verbinden, und wobei der Leistungsversorgungsanschluss (70, 72) mit ersten Anschlusseinrichtungen (70) zur Bereitstellung von Energie von dem Energiemodul (50) und zweiten Anschlusseinrichtungen (72) zur Bereitstellung von Energie von der Energieversorgung (36) versehen ist.

2. Ladesystem (4) nach Anspruch 1, wobei das Energiemodul (50) eine Ladeeinheit (60) zum Aufladen des Kondensators (52) aufweist.

3. Ladesystem (4) nach Anspruch 1 oder 2, wobei der Kondensator (62) einen Superkondensator aufweist.

4. Ladesystem (4) nach Anspruch 1, 2 oder 3, wobei das Energiemodul (50) mit einem Energiemodulrelais (68) versehen ist, das zwischen dem Kondensator und dem Hebemechanismus angeordnet ist.

5. Ladesystem (4) nach einem der vorangehenden Ansprüche, das ferner ein Hauptrelais (58) aufweist, das zwischen dem Energiemodul (50) und der Energieversorgung (36) angeordnet ist.

6. Ladesystem (4) nach Anspruch 1 oder 5, wobei die Energieversorgung (36) eine Fahrzeugbatterie (40) aufweist.

7. Ladesystem (4) nach Anspruch 6, wobei die Fahrzeugbatterie (40) eine 24-V-Batterie aufweist.

8. Ladesystem (4) nach einem der vorangehenden Ansprüche, das ferner eine Hebesteuerung (52) zum Steuern des Hebemechanismus (14, 16) aufweist, wobei die Hebesteuerung (52) konfiguriert ist, um das Energiemodul (50) zu steuern.

9. Ladesystem nach einem der vorangehenden Ansprüche, das ferner eine Energierückgewinnungseinrichtung zum Aufladen des Kondensators (62) des Energiemoduls (50) während des Absetzens eines Müllbehälters (6) aufweist.

10. Müllfahrzeug (2), das mit einem Ladesystem (4) nach einem der vorhergehenden Ansprüche versehen ist.

11. Müllfahrzeug (2) nach Anspruch 10, das ferner ein Energierückgewinnungssystem zur Rückgewinnung von Energie von dem Fahrzeug und Aufladen des Kondensators (62) des Energiemoduls (50) damit aufweist.

12. Verfahren zum Leeren eines Müllbehälters (6), wobei das Verfahren die folgenden Schritte aufweist:
- Bereitstellen eines Ladesystems (4) und/oder eines Müllfahrzeugs (2) nach einem der vorangehenden Ansprüche;
- Aufnehmen des Müllbehälters (6), um mit dem Ladesystem (4) geleert zu werden;
- Anheben und Entleeren des Müllbehälters (6); und
- Absetzen des entleerten Müllbehälters (6).

13. Verfahren nach Anspruch 12, das ferner den Schritt des Bereitstellens von Energie an den Hebemechanismus (14, 16) mit dem Energiemodul (50) aufweist, so dass der Hebemechanismus (14, 16) einen vollständigen Entleerungszyklus mit Aufnehmen, Anheben, Entleeren und Absetzen eines Müllbehälters (6) durchführen kann.

## Revendications

1. Dispositif de chargement (4) destiné à soulever et à vider un conteneur (6) dans un collecteur, le dispositif de chargement (4) comprenant :
un châssis pouvant être fixé avec un moyen de couplage sur le collecteur ;
un mécanisme de levage (14, 16) agencé sur le châssis afin de saisir et de soulever le conteneur (6) ;
un dispositif d'entraînement de levage (38) relié de manière opérationnelle au mécanisme de levage (14, 16),
dans lequel le dispositif d'entraînement de levage (38) comprend :
un dispositif de levage (38) comportant une liaison d'alimentation en énergie (70, 72) et configuré de manière à entraîner le mécanisme de levage ; et
un module d'énergie (50) comprenant un condensateur (62) destiné à délivrer de l'énergie au dispositif de levage par l'intermédiaire de la liaison d'alimentation en énergie, **caractérisé en ce que**
le module d'énergie (50) comporte des moyens de liaison (48) destinés à raccorder de manière opérationnelle le module d'énergie (50) à une source d'énergie (36), et dans lequel la liaison d'alimentation en énergie (70, 72) comporte des premiers moyens de liaison (70) destinés à délivrer de l'énergie à partir du module d'énergie (50) et des seconds moyens de liaison (72) destinés à délivrer de l'énergie à partir de la source d'énergie (36).

2. Dispositif de chargement (4) selon la revendication 1, dans lequel le module d'énergie (50) comprend un circuit de charge (60) destiné à charger le condensateur (62).

3. Dispositif de chargement (4) selon la revendication 1 ou 2, dans lequel le condensateur (62) comprend un super-condensateur.

4. Dispositif de chargement (4) selon la revendication 1, 2 ou 3, dans lequel le module d'énergie (50) comporte un relais de module d'énergie (68) agencé entre le condensateur et le mécanisme de levage.

5. Dispositif de chargement (4) selon l'une quelconque des revendications précédentes, comprenant, en outre, un relais principal (58) agencé entre le module d'énergie (50) et la source d'énergie (36).

6. Dispositif de chargement (4) selon la revendication 1 ou 5, dans lequel la source d'énergie (36) comprend une batterie de véhicule (40).

7. Dispositif de chargement (4) selon la revendication 6, dans lequel la batterie de véhicule (40) comprend une batterie de 24 V.

8. Dispositif de chargement (4) selon l'une quelconque des revendications précédentes, comprenant, en outre, un dispositif de commande de levage (52) destiné à commander le mécanisme de levage (14, 16), dans lequel le dispositif de commande de levage (52) est configuré de manière à commander le module d'énergie (50).

9. Dispositif de chargement selon l'une quelconque des revendications précédentes, comprenant, en outre, un moyen de récupération d'énergie destiné à charger le condensateur (62) du module d'énergie (50) au cours de la repose d'un conteneur (6).

10. Camion de déchets (2) équipé d'un dispositif de chargement (4) selon l'une quelconque des revendications précédentes.

11. Camion de déchets (2) selon la revendication 10, comprenant, en outre, un dispositif de récupération d'énergie destiné à récupérer de l'énergie à partir du véhicule et à charger le condensateur (62) du module d'énergie (50) avec celle-ci.

12. Procédé de vidage d'un conteneur (6), le procédé comprenant les étapes de :
agencement d'un dispositif de chargement (4) et/ou d'un camion de déchets (2) selon l'une quelconque des revendications précédentes ;
saisie du conteneur (6) à vider avec le dispositif de chargement (4) ;
levage et vidage du conteneur (6) ; et
repose du conteneur (6) vide.

13. Procédé selon la revendication 12, comprenant, en outre, l'étape de fourniture d'énergie au mécanisme de levage (14, 16) avec le module d'énergie (50) de telle sorte que le mécanisme de levage (14, 16) peut exécuter un cycle vidage complet avec la saisie, le levage, le vidage et la repose d'un conteneur (6).
